# EUROPEAN PATENT SPECIFICATION

(11) **EP 1 927 722 B1**
(45) Date of publication and mention of the grant of the patent: **24.02.2010**
(21) Application number: 07121543.8
(22) Date of filing: 26.11.2007
(51) Int. Cl.: F01D 5/06, B23P 15/04

(54) **Rotary assembly components and methods of fabricating such components**
Drehbauteile und Herstellungsverfahren dafür
Composants d'ensembles rotatifs et procédés pour la fabrication de tels composants

(30) Priority: 28.11.2006 US 564064
(43) Date of publication of application: 04.06.2008
(73) Proprietor: GENERAL ELECTRIC COMPANY, Schenectady, NY 12345 (US)
(72) Inventor: Wayte, Peter, Maineville, OH 45039 (US); Mickle, Brian Francis, West Chester, OH 45069 (US); Woodfield, Andrew Philip, Maineville, OH 45039 (US)
(74) Representative: Gray, Thomas

(56) References cited:
- EP-A- 1 649 970
- US-A- 5 795 413
- US-A1- 2005 127 138

## Description

This invention relates generally to rotary machines, and more particularly to methods and apparatus for fabricating components of rotary machines.

At least some known rotary machines such as, but not limited to, steam turbine engines and/or gas turbine engines, include various rotor assemblies, such as a fan assembly, a compressor, and/or turbines that each includes a rotor assembly. At least some known rotor assemblies include components such as, but not limited to, disks, shafts, spools, bladed disks ("blisks"), seals, and/or bladed integrated rings ("blings"). Such components may be subjected to different temperatures depending on an axial position within the gas turbine engine.

For example, during operation, at least some known gas turbine engines may be subjected to an axial temperature gradient that extends along a central longitudinal axis of the engine. Generally, gas turbine engine components are exposed to lower operating temperatures towards a forward portion of the engine and higher operating temperatures towards an aft portion of the engine. As such, known rotor assemblies and/or rotor components are generally fabricated from materials capable of withstanding an expected maximum temperature at its intended position within the engine.

To accommodate different temperatures, different engine components have been forged with different alloys that have different material properties that enable the component to withstand different expected maximum radial and/or axial temperatures. More specifically, known rotary assemblies and/or rotary components are each generally forged from a single alloy that is capable of withstanding the expected maximum temperature of the entire rotary assembly and/or rotary component. However, forging an engine component with both high dwell time fatigue strength material properties and optimum creep resistance material properties has not been possible in a single forging. More specifically, although an alloy may be processed differently to produce different material properties, known forging methods generally do not enable mixing differently processed alloys to be combined in a single forging.

For example, forging a single engine component to facilitate increasing dwell time fatigue strength generally adversely affects the creep resistance capability of the component. Reducing the creep resistance of the component may induce increased plastic deformation to the component that may cause the engine component to rub and/or wear against other engine components under high temperatures. In contrast, forging a single engine component to facilitate increasing the creep resistance capability of the component may adversely affect the dwell time fatigue strength of the component. As a result of reduced dwell time fatigue strength, the engine component may experience increased fatigue cracking under lower temperatures. As such, known forging methods may only provide limited or no ability to best balance the behavior of a component.

US 5 795 413 discloses an alpha-beta titanium alloy forging comprising a first portion treated in the alpha-beta phase field and a second portion which is beta processed. The forging can comprise a disk for an aircraft gas turbine engine.

The present invention provides a rotor assembly for a turbine, said rotor assembly comprising:
a first portion (210) of a rotor component forged from a first material, said first material being alpha/beta processed; and
a second portion (230) of said rotor component separately forged from a second material that is the same material as said first material, said second portion being beta processed, said first material and said second material comprising titanium-based alloys, **characterised in that** said second portion (230) is welded to said first portion (210) at a first axial position.

The present invention also provides a rotor machine including a longitudinal axis, said rotor machine comprising:
a first portion (210) of a disk forged from a first material, said first material being alpha/beta processed,
a second portion (230) of said disk separately forged from a second material that is the same material as said first material, said second material being beta processed, said first material and said second material comprising titanium-based alloys, **characterised in that** said second portion is welded to said first portion at a first axial position.

Various aspects and embodiments of the present invention will now be described in connection with the accompanying drawings, in which:
Figure 1 is a schematic illustration of an exemplary turbofan gas turbine engine assembly;
Figure 2 is a partial side view of an exemplary known single disk stage that may be used with the turbofan gas turbine engine assembly shown in Figure 1; and
Figure 3 is a partial side view of an exemplary single disk stage that may be used with the turbofan gas turbine engine assembly shown in Figure 1.

The exemplary methods and apparatus described herein overcome the disadvantages of known assembling methods and rotor components by fabricating and assembling component parts based on an axial temperature gradient of the respective component such that a reduction in dwell time fatigue and creep deformation of the rotor components are facilitated to be reduced. It should be appreciated that "axial" and "axially" are used throughout this application and reference directions and orientations that are substantially parallel to a central rotational axis of the rotary machine. It should also be appreciated that "axial-circumferential edge" is used throughout this application to refer to circumferential edges that are orientated substantially perpendicular to the central rotational axis of the rotary machine. It should also be appreciated that the terms "radial" and "radially" are used throughout this application to reference directions and orientations that are substantially perpendicular to the central rotational axis. It should also be appreciated that "radial-circumferential plane" is used throughout this application to reference planes orientated substantially perpendicular to the central rotational axis of the rotary machine. Moreover, it should be appreciated that "forward" is used throughout this application to refer to directions and positions located upstream and towards an inlet side of a gas turbine engine, and that "aft" is used throughout this application to refer to directions and positions located downstream and towards an exhaust side of the gas turbine engine.

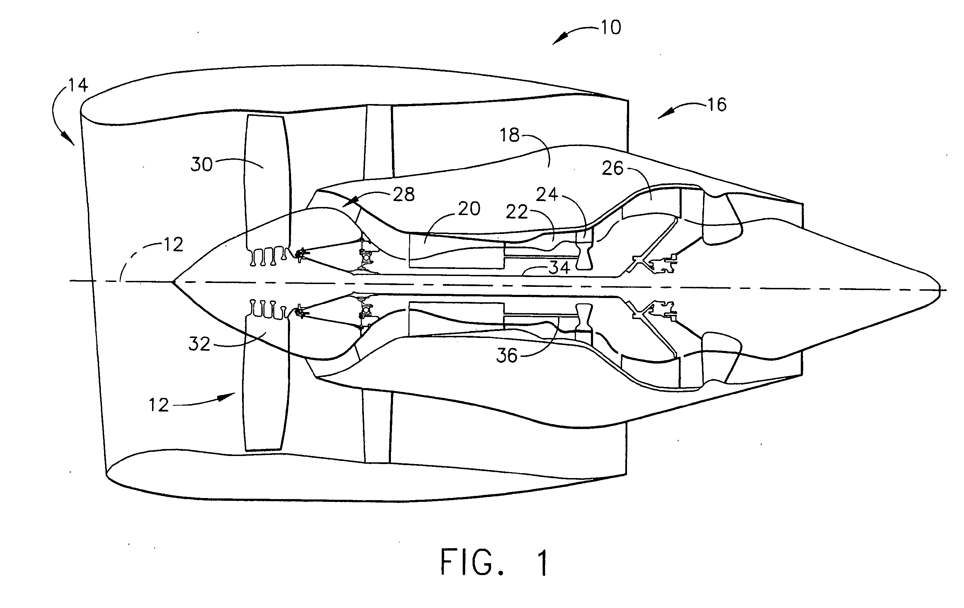

Figure 1 is a schematic illustration of an exemplary turbofan engine assembly 10 having a central rotational axis 12. In the exemplary embodiment, turbofan engine assembly 10 includes an air intake side 14 and an exhaust side 16. Turbofan engine assembly 10 also includes a core gas turbine engine 18 that includes a high-pressure compressor 20, a combustor 22, and a high-pressure turbine 24. Moreover, turbofan engine assembly 10 includes a low-pressure turbine 26 that is disposed axially downstream from core gas turbine engine 18, and a fan assembly 28 that is disposed axially upstream from core gas turbine engine 22. Fan assembly 28 includes an array of fan blades 30 extending radially outward from a rotor hub 32. Furthermore, turbofan engine assembly 10 includes a first rotor shaft 34 disposed between fan assembly 28 and the low-pressure turbine 26, and a second rotor shaft 36 disposed between high-pressure compressor 20 and high-pressure turbine 24 such that fan assembly 28, high-pressure compressor 20, high-pressure turbine 24, and low-pressure turbine 26 are in serial flow communication and co-axially aligned with respect to central rotational axis 12 of turbofan engine assembly 10.

During operation, air enters through intake side 14 and flows through fan assembly 28 to high-pressure compressor 20. Compressed air is delivered to combustor 22. Airflow from combustor 22 drives high-pressure turbine 24 and low-pressure turbine 26 prior to exiting turbofan engine assembly 10 through exhaust side 16.

High-pressure compressor 20, combustor 22, high-pressure turbine 24, and low-pressure turbine 26 each include at least one rotor assembly. Rotary or rotor assemblies are generally subjected to different temperatures depending on their relative axial position within turbofan engine assembly 10. For example, in the exemplary embodiment, turbofan engine assembly 10 has generally cooler operating temperatures towards forward fan assembly 28 and hotter operating temperatures towards aft high-pressure compressor 20. As such, rotor components within high-pressure compressor 20 are generally fabricated from materials that are capable of withstanding higher temperatures as compared to fabrication materials for rotor components of fan assembly 28.

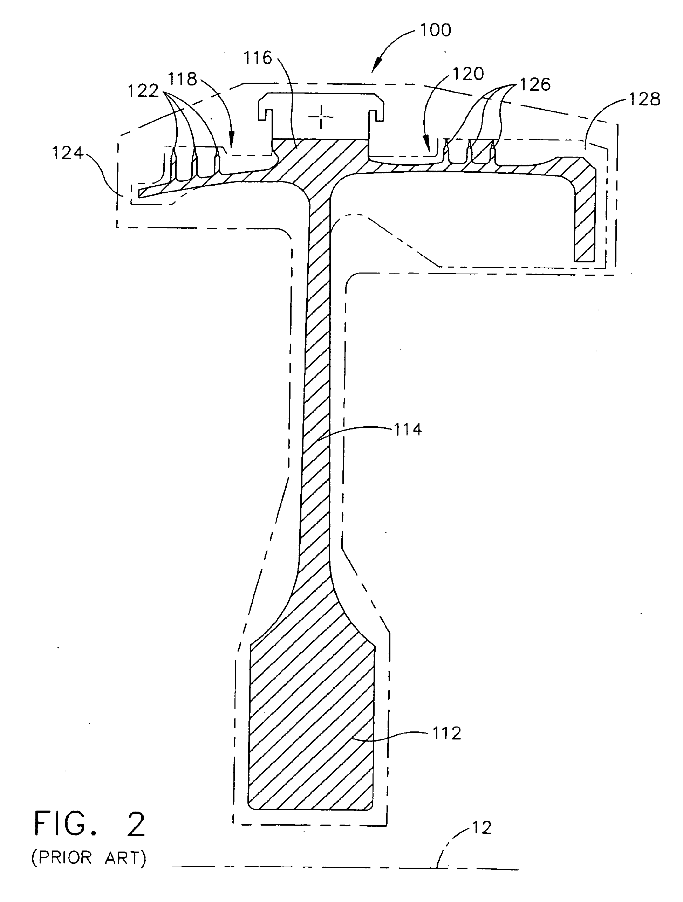

Figure 2 is a partial side view of an exemplary known single disk stage 100 that may be used with a turbofan gas turbine engine assembly, such as turbofan engine assembly 10 (shown in Figure 1). In the exemplary embodiment, disk stage 100 is a unitary engine component that includes several component areas. For example, disk stage 100 includes a radially inward hub 112, a web 114 extending radially outward from hub 112, and a rim 116 extending radially outward from web 114. Disk stage 100 also includes a first arm 118 and an opposing second arm 120 that each extend axially from rim 116. First arm 118 includes seal teeth 122 and a first end 124. Second arm 120 includes seal teeth 126 and a second end 128.

In the exemplary embodiment, disk stage 100 may be coupled to a plurality of similar disk stages (not shown) that are rotatably coupled at different axial positions along assembly central rotational axis. However, disk stage 100 is subjected to different temperatures depending on an axial position with respect to central rotational axis 12. As such, disk stage 100 is fabricated to include different material properties at different axial positions along central rotational axis 12. For example, disk stage 100 located towards a forward section of turbofan engine assembly 10 is generally cooler that a same disk stage 100 located towards an aft section of turbofan engine assembly 10. As such, stage 100 is generally fabricated from materials that withstand lower temperatures than materials used in fabricating components downstream.

In the exemplary embodiment, different areas within disk stage 100 are also subjected to different temperatures depending on an axial and/or radial position with respect to central rotational axis 12. For example, bore 112 and web 114 are generally exposed to lower temperatures and higher stresses as compared to second end 128. As such, bore 112 and web 114 are generally subjected to larger dwell time fatigue ("dwell fatigue") as compared to second end 128. Therefore, fabrication materials having higher dwell fatigue strength are desirable for bore 112 and web 114. In contrast, second end 128 is generally exposed and subjected to higher temperatures as compared to bore 112 and web 114. As such, second end 128 is generally subjected to larger creep deformation ("creep") as compared to bore 112 and web 114. Therefore, fabrication materials having higher creep resistance properties are desirable for second end 128.

As described above, the same alloy may be processed differently to produce different material properties. However, known forging methods generally do not enable different processing sequences or alloys to be mixed in a single forging. Therefore, at least some known forging methods use processes which attempt to optimize a single material property for a single forged engine component.

Two known types of processes include coarse-grain processing and fine-grain processing. In titanium alloys, coarse-grain processing is called β-processing and fine-grain processing is called α/β processing. Beta β-processing includes forging and/or heat-treating a titanium alloy above a β-transus. More specifically, β-processing may be accomplished during forging of an engine component, or alternatively, the component may be beta solution heat-treated. As such, β-processing attempts to optimize the creep resistance while significantly reducing the high temperature fatigue strength. However, beta heat-treating results in the entire component having a relatively large prior beta grain structure. Although creep resistance properties are generally enhanced, properties such as, but not limited to, ductility and fatigue strength may be reduced within beta heat-treated components. Therefore, larger cross-sectional areas may be required to carry the same operating loads. As a result, beta heat-treated components are generally heavier and more expensive to fabricate as compared to components fabricated with materials that are optimized for dwell fatigue strength.

Fine-grain processing, (α/β processing) for titanium alloys, includes forging and heat-treating a titanium alloy below the β-transus. Alloys such as, but not limited to, nickel (Ni)-based alloys may be fine-grain processed to increase fatigue strength. However, Ni-based components are significantly heavier as compared to other alloys processed for creep resistance in an intermediate temperature regime. Although Ni-based components are typically used in sections of the engine that are subjected to higher temperatures as compared to other engine sections, the inability to best balance properties within a component may require the use of Ni-alloys within a forward engine section that is subjected to lower temperatures. Such nickel-based components increase an overall weight of the engine. Moreover, Ni-based components can not be welded to titanium components. As such, fasteners such as bolts are generally used to couple components within the engine. However, such bolted joints also increase the overall weight of the engine.

Alternatively, other alloys may be processed to facilitate increasing dwell fatigue strength while reducing an overall weight of the engine as compared to the above-described known processes. More specifically, such components may be fabricated from lighter weight materials as compared to Ni-based alloys, and/or such components may be permitted to creep during operation of the engine. However, creep generally reduces component life and increases the monitoring requirements for the components. As a result, such alloys generally increase overall maintenance costs of the engine.

Several other processing approaches have been attempted to produce engine components by fabricating a single alloy to obtain a combination of material properties. For example, some known modified forging/heat treatment methods may produce a disk having an α/β-structure in the bore to enhance dwell fatigue strength and a creep resistant structure in the rim. Similar approaches, known as dual heat treatments, have been used with Ni-based superalloys to develop fine-grained, fatigue-resistant microstructures in the bore as compared to coarse-grained, creep-resistant microstructures in the rim. Another known approach involves β-processing an entire disk and then forging a bore portion of the disk below the β-transus to convert the bore portion to an α/β structure. However, such approach generally requires extremely tight process controls, are costly, and may often result in non-optimum component properties such as, but not limited to, a β-annealed structure having low ductility and low fatigue strength in the rim of the disk.

Another processing approach increases the overall weight of the engine component, such as rotor disks, by increasing a size of the component in an attempt to reduce stress levels induced to the engine components. However, this approach also increases an overall weight of the engine, and decreases a distance between adjacent disks. As a result, access to some engine components may be more difficult, and/or engine redesign may be necessary, overall fabrication and maintenance costs may increase, and/or engine power and efficiency may be reduced.

In the exemplary embodiment, disk stage 100 requires high strength-to-weight ratio, corrosion resistance, and creep resistance. For example, disk stage 100 may be forged from a single alloy such as, but not limited to, titanium alloy Ti6242. For example, at operating temperatures below 540°C (1000°F), titanium (Ti)-based alloys are the preferred material for engine components because such alloys are stronger and lighter than Ni-based alloys. More specifically, Ti6242 containing nominally 6% aluminum, 2% tin, 4% zirconium, 2% molybdenum, and 0.1 % silicon by weight is used with at least some known rotor disks. Disk stage 100 is forged from a single high temperature Ti-based alloy composition that is capable of withstanding a maximum axial operating temperature that may be subjected to the entire disk stage 100. In other words, in a single forging process, bore 112, web 114, and second end 128 are fabricated from the same material that is processed to withstand an intended maximum axial operating temperature, e.g., optimum creep resistance, which may be subjected to the entire disk stage 100. As such, disk stage 100 is not forged to have both high dwell fatigue strength and optimum creep resistance.

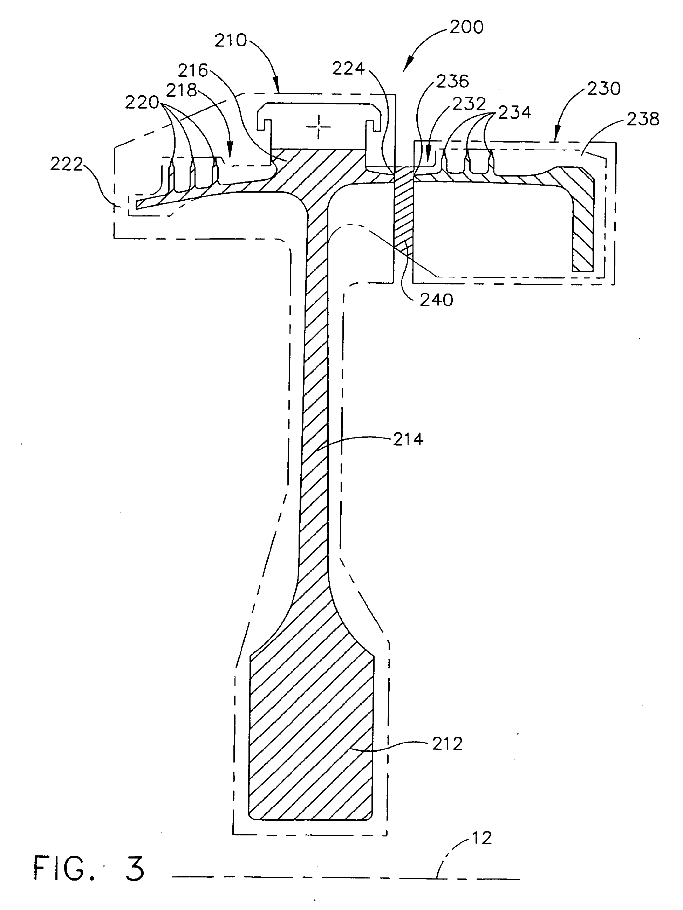

Figure 3 is a partial side view of an exemplary single disk stage 200 that may be used with a turbofan gas turbine engine assembly, such as turbofan engine assembly 10 (shown in Figure 1). In the exemplary embodiment, disk stage 200 includes at least two separately processed disk portions 210 and 230 that are each separately forged, and are then coupled together, to form a titanium alloy component having optimum creep capability and optimum dwell fatigue capability. Portion 210 includes a radially inward hub 212, a web 214 extending radially outward from hub 212, and a rim 216 extending radially outward from web 214. Portion 210 also includes a first arm 218 that includes seal teeth 220 and a first end 222, and an opposing axial-circumferential edge 224 that extends from rim 216. Portion 230 includes a second arm 232 with seal teeth 234 and an axial-circumferential edge 236, and a second end 238 that is located on an opposite side of seal teeth 234 than axial-circumferential edge 236. First and second portions 210 and 230 may be welded together to form disk stage 200, as discussed in detail below. Alternatively, the entire rim 216 including arms 218 and 232, seal teeth 220 and 224, and arm ends 222 and 238 may be welded in an axial-circumferential plane to web 214.

In the exemplary embodiment, disk stage 200 may be coupled to a plurality of similar disk stages (not shown) that are rotatably coupled at different axial positions along central rotational axis 12 (shown in Figure 1). As such, disk stage 200 is subjected to different temperatures depending on an axial position along central rotational axis 12. For example, a disk stage 200 located towards a forward section of turbofan engine assembly 10 is generally cooler than the same disk stage 200 located towards an aft section of turbofan engine assembly 10.

In the exemplary embodiment, portions of disk stage 200 are also subjected to different temperatures depending on an axial and/or radial position along the central rotational axis. For example, bore 212 and web 214 are generally subjected to lower temperatures as compared to second arm 232. As such, bore 212 and web 214 are generally subjected to larger dwell fatigue stresses as compared to second end 238. In contrast, second end 238 is generally exposed and subjected to higher temperatures as compared to bore 212 and web 214. As such, second end 238 is generally subjected to larger creep deformation than bore 212 and web 214.

As described above, the same alloy may be processed differently to produce different material properties. However, known forging methods generally do not enable differently processed alloys to be mixed in a single forging. As such, in the exemplary embodiment, first and second portions 210 and 230 of disk stage 200 are separately processed and forged to facilitate optimizing both dwell fatigue strength and creep resistance material properties for a single engine component. More specifically, in the exemplary embodiment, first and second portions 210 and 230 are separately processed, separately forged, and are coupled to each other to facilitate optimizing material properties in consideration of temperature gradients that may exist within a single engine component.

For example, in the exemplary embodiment, axially forward first portion 210 is generally exposed to lower operating temperatures than aft second portion 230. As such, to facilitate resisting fatigue stresses, first portion 210 is fabricated with materials that withstand lower temperatures and that have higher dwell fatigue strength than second portion 230. For example, first portion 210 may be fabricated and forged from Ti6242, or similar alloys, at a selected temperature below the β-transus. More specifically, first portion 210 may be forged from a billet that is eight inches in diameter or less at a temperature below the beta β-transus, and is rapidly cooled utilizing cooling methods such as, but not limited to fan air cooling and/or quenching with water and/or oil, for example. After rapid cooling via quenching, a microstructure having substantially between 15% and 35% volume fraction, depending on the component size and desired cooling rate, of a spheroidized primary alpha is obtained.

As a result, first portion 210 is processed to facilitate obtaining material properties of optimum dwell capability in portions of disk 200 requiring higher dwell fatigue strength as compared to second portion 230.

In the exemplary embodiment, second portion 230 is generally exposed to higher operating temperatures than first portion 210. As such, compared to first portion 210, second portion 230 is fabricated with materials that withstand higher temperatures and that have higher creep resistance capabilities to facilitate reducing creep deformation. For example, second portion 230 may be fabricated and forged, e.g., ring-rolled, from Ti6242 or similar alloys at a selected temperature above the β-transus. Alternatively, the second piece may be forged above or below the β-transus and heat treated above the β-transus resulting in a structure having maximum creep resistance. In this case, although the beta heat structure will have maximum creep resistance, such structure will have significantly reduces fatigue and ductility. Such alloys include, but are not limited to, Ti834 that containing nominally 6% aluminum, 4% tin, 4% Zirconium, 0.75% Niobium, 0.5% Molybdenum, 0.4% silicon, and 0.06% carbon. Such alloys may also include Ti829, Ti685, or alternative creep resistant titanium alloys. As a result, second portion 210 is processed to facilitate obtaining material properties of optimum creep capabilities in portions of disk 200 requiring higher creep resistance as compared to first portion 210.

First portion 210 and second portion 230 may be coupled to each other by various known metallurgical techniques that couple first portion 210 and second portion 230 along a radial-circumferential plane that is substantially perpendicular to central rotational axis 12. For example, first axial-circumferential edge 224 and second axial-circumferential edge 236 may be coupled together via radial welds 240 such as, but not limited to, inertial welds, friction welds, linear friction welds, and/or fusion welds such as electron beam welds. Alternatively, the entire rim 216 including arms 218 and 232, seal teeth 220 and 224, and arm ends 222 and 238 may be coupled together via an axial weld in an axial-circumferential plane to web 214. The coupling together of rim 216 and web 214 may be accomplished by, but not limited to, inertial welds, friction welds, linear friction welds, and/or fusion welds such as electron beam welds.

During fabrication of disk stage 200, the temperatures generated during welding and/or during engine operations may induce creep deformation in axial-circumferential edge 224 and/or axial-circumferential edge 236. Therefore, it is desirable that axial-circumferential edge 224 and axial-circumferential edge 236 be located in disk areas of relatively lower stresses and lower temperatures as compared to other disk areas. For example, first portion 210 may be α/β-processed to obtain increased dwell fatigue properties. If the creep capability of the α/β-processed material used in fabricating first portion 210 is capable of meeting creep requirements in rim 216 and first arm 218, but is not capable in second arm 232, the weld 240 may be located in a transition zone located between rim 216 and second arm 232. Additionally, material properties of weld 240 and its associated heat affected zones should also be considered to facilitate reducing creep reduction, especially in the case of solid state welds having refined microstructures that may be prone to reduced creep resistant properties.

Although axial-circumferential edge 224 and axial-circumferential 236 are illustrated as being substantially perpendicular to the central rotational axis, it should be appreciated that axial-circumferential edge 224 and axial-circumferential edge 236 may be of any shape or orientation, such as obliquely oriented with respect to central rotational axis 12 and with respect to each other, as long as such edges 224 and 236 are shaped generally complementary to each other to facilitate the welding process. Similarly, for the case where the weld is located at web 214, it should be appreciated that the surfaces to be joined may be of any shape or orientation, such as obliquely oriented with respect to central rotational axis 12 and with respect to each other, as long as such edges to be joined are shaped generally complementary to each other to facilitate the welding process. Following welding, in the exemplary embodiment, a stress relief heat treatment is applied to welded disk stage 200, and welded disk stage 200 is acid etched to remove an alpha case generated during the stress relief heat treatment.

In exemplary disk stage 200, first and second portions 210 and 230 are separately processed to obtain different dwell fatigue and creep capabilities depending on the intended location of stage 200, as measured along central rotational axis 12. Because the differently processed first and second portions 210 and 230 are subsequently welded together, lightweight engine components having both increased creep resistance and increased dwell fatigue resistance may be fabricated. As a result, engine power and efficiency may be increased as compared to known single processed Ti-based alloy components. Moreover, the overall weight, and fabrication and maintenance costs associated with disk 200 may be reduced as compared to known components fabricated from Ni-based alloys.

Exemplary embodiments of fabricating and assembling rotor components are described in detail above. The rotor components are not limited to use with the turbofan engine assembly described herein, but rather, the rotor components can be utilized independently and separately from other rotor assembly components described herein. Moreover, the invention is not limited to the embodiments of the rotor assembly and components described above in detail. Rather, other variations of the rotary assembly and components may be utilized within the scope of the claims.

While the invention has been described in terms of various specific embodiments, those skilled in the art will recognize that the invention can be practiced with modification within the scope of the claims.

## Claims

1. A rotor assembly for a turbine, said rotor assembly comprising:
a first portion (210) of a rotor component forged from a first material, said first material being alpha/beta processed; and
a second portion (230) of said rotor component separately forged from a second material that is the same material as said first material, said second portion being beta processed, said first material and said second material comprising titanium-based alloys, **characterised in that** said second portion (230) is welded to said first portion (210) at a first axial position.

2. A rotor assembly according to Claim 1, wherein said first and second portions (210,230) are each coupled to each other in at least one of a radial-circumferential plane that is substantially perpendicular to a longitudinal axis of said rotor assembly and an axial-circumferential plane that is substantially perpendicular to the longitudinal axis of said rotor assembly.

3. A rotor assembly according to any preceding Claim, wherein an axial-circumferential edge (224,236) of said second portion (230) is coupled to an axial-circumferential edge of said first portion (210) at the radial-circumferential plane.

4. A rotor machine including a longitudinal axis, said rotor machine comprising:
a first portion (210) of a disk forged from a first material, said first material being alpha/beta processed,
a second portion (230) of said disk separately forged from a second material that is the same material as said first material, said second material being beta processed, said first material and said second material comprising titanium-based alloys, **characterised in that** said second portion is welded to said first portion at a first axial position.

## Patentansprüche

1. Rotorbaugruppe für eine Turbine, wobei die Rotorbaugruppe aufweist:
einen ersten Abschnitt (210) einer Rotorkomponente, der aus einem ersten Material geschmiedet ist, wobei das erste Material Alpha/Beta-behandelt ist; und
einen zweiten Abschnitt (230) der Rotorkomponente, der getrennt aus einem zweiten Material geschmiedet ist, das dasselbe Material wie das erste Material ist, wobei der zweite Abschnitt Beta-behandelt ist und wobei das erste Material und das zweite Material Titan-basierende Legierungen aufweisen, **dadurch gekennzeichnet, dass** der zweite Abschnitt (230) mit dem ersten Abschnitt (210) an einer ersten axialen Position verschweißt ist.

2. Rotorbaugruppe nach Anspruch 1, wobei die ersten und zweiten Abschnitte (210, 230) jeweils miteinander in wenigstens einer von einer radialen Umfangsebene, die im Wesentlichen senkrecht zu einer Längsachse der Rotorbaugruppe liegt, und in einer axialen Umfangsebene, die im Wesentlichen senkrecht zu der Längsachse der Rotorbaugruppe liegt, verbunden sind.

3. Rotorbaugruppe nach einem der vorstehenden Ansprüche, wobei ein Axial-Umfangs-Rand (224, 236) des zweiten Abschnittes (230) mit einem Axial-Umfangs-Rand des ersten Abschnittes (210) an der Radialumfangsebene verbunden ist.

4. Rotormaschine mit einer Längsachse, wobei die Rotormaschine aufweist:
einen ersten Abschnitt (210) einer Scheibe, der aus einem ersten Material geschmiedet ist, wobei das erste Material Alpha/Beta-behandelt ist; und
einen zweiten Abschnitt (230) der Scheibe, der getrennt aus einem zweiten Material geschmiedet ist, das dasselbe Material wie das erste Material ist, wobei der zweite Abschnitt Beta-behandelt ist und wobei das erste Material und das zweite Material Titan-basierende Legierungen aufweisen, **dadurch gekennzeichnet, dass** der zweite Abschnitt (230) mit dem ersten Abschnitt (210) an einer ersten axialen Position verschweißt ist.

## Revendications

1. Ensemble de rotor pour turbine, ledit ensemble de rotor comprenant :
une première partie (210) d'une pièce de rotor forgée dans une première matière, ladite première matière subissant un traitement alpha/bêta ; et
une seconde partie (230) de ladite pièce de rotor formée séparément dans une seconde matière qui est la même matière que ladite première matière, ladite seconde partie subissant un traitement bêta, ladite première matière et ladite seconde matière étant constituées par des alliages à base de titane, **caractérisé en ce que** ladite seconde partie (230) est soudée à ladite première partie (210) au niveau d'un premier emplacement axial.

2. Ensemble de rotor selon la revendication 1, dans lequel lesdites première et seconde parties (210, 230) sont assemblées l'une avec l'autre dans un plan radial-circonférentiel sensiblement perpendiculaire à un axe longitudinal dudit ensemble de rotor et/ou dans un plan axial-circonférentiel sensiblement perpendiculaire à l'axe longitudinal dudit ensemble de rotor.

3. Ensemble de rotor selon l'une quelconque des revendications précédentes, dans lequel un bord axial-circonférentiel (224, 226) de ladite seconde partie (230) est assemblé avec un bord axial-circonférentiel de ladite première partie (210) dans le plan radial-circonférentiel.

4. Machine à rotor comportant un axe longitudinal, ladite machine à rotor comprenant :
une première partie (210) d'un disque forgée dans une première matière, ladite première matière subissant un traitement alpha/bêta,
une seconde partie (230) dudit disque forgée séparément dans une seconde matière qui est la même matière que ladite première matière, ladite seconde matière subissant un traitement bêta, ladite première matière et ladite seconde matière étant constituées par des alliages à base de titane, **caractérisée en ce que** ladite seconde partie est soudée à ladite première partie à un premier emplacement axial.
